# EUROPEAN PATENT APPLICATION

(11) **EP 4 663 078 A1**
(43) Date of publication of application: **17.12.2025**
(21) Application number: 25169708.2
(22) Date of filing: 10.04.2025
(51) Int. Cl.: A47J 37/06

(54) **COMPACT AIR FRYER**

(30) Priority: 11.04.2024 US 202463632704 P
(71) Applicant: Sensio Inc., New York, NY 10016 (US)
(72) Inventor: Garcia, Jorge B., NEW YORK, 10016 (US)
(74) Representative: Epping - Hermann - Fischer

(57) **Abstract**

An air fryer, comprising a cooking basket including air accelerator vents configured to increase air velocity, a cooking chamber for receiving the cooking basket, a fan and heater assembly, the fan comprising fan blades for creating airflow, an air manifold positioned between the fan and heater assembly and the cooking basket to channel the airflow from the fan through the air accelerator vents and into the cooking basket, protruding features on a bottom surface of the basket to facilitate the airflow beneath food items placed in the basket.

## Description

### FIELD

The present disclosure generally relates to cooking appliances, and more specifically, to compact air fryers with an air flow system and design features that enhance cooking efficiency and versatility.

### BACKGROUND

Air fryers have become a popular kitchen appliance due to their ability to cook food with less oil compared to traditional frying methods. These appliances work by circulating hot air around the food to produce a crispy exterior. The air is heated by a heating element and then circulated by a fan. The food is placed in a cooking basket that allows the hot air to pass around and through the food.

Conventional air fryers often have limitations. For instance, the height of the appliance can be an issue for users with limited countertop space. Additionally, the cooking consistency can be affected by the air flow pattern within the appliance. In some designs, the air flow is not evenly distributed, leading to uneven cooking. Furthermore, the ability to cook different foods simultaneously with different cooking requirements can be a challenge.

### SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

In one aspect, the present disclosure relates to an air fryer, comprising a cooking basket including air accelerator vents configured to increase air velocity, a cooking chamber for receiving the cooking basket, a fan and heater assembly, the fan comprising fan blades for creating airflow, an air manifold positioned between the fan and heater assembly and the cooking basket to channel the airflow from the fan through the air accelerator vents and into the cooking basket, and protruding features on a bottom surface of the basket to facilitate the airflow beneath food items placed in the basket.

In embodiments of this aspect, the disclosure according to any one of the above example embodiments, wherein the air accelerator vents are positioned as parallel apertures on a wall of the cooking basket and configured to direct the airflow in a substantially linear pattern through the cooking basket.

In embodiments of this aspect, the disclosure according to any one of the above example embodiments, wherein the protruding features comprise a plurality of bump features distributed across the bottom surface of the cooking basket.

In embodiments of this aspect, the disclosure according to any one of the above example embodiments, further comprising a top panel cavity and an air duct configured to form a return path for the airflow from the cooking basket back to the fan and heater assembly.

In embodiments of this aspect, the disclosure according to any one of the above example embodiments, wherein the air duct includes a vent configured to allow steam to escape from the air fryer.

In embodiments of this aspect, the disclosure according to any one of the above example embodiments, wherein the air accelerator vents are venturi-shaped to increase the air velocity from the fan into the cooking basket.

In embodiments of this aspect, the disclosure according to any one of the above example embodiments, further comprising a crisper tray positioned within the cooking basket, the crisper tray including apertures configured to allow the airflow from the air accelerator vents to pass through the crisper tray.

In one aspect, the present disclosure relates to a cooking basket for an air fryer, comprising air accelerator vents configured to increase air velocity, and a bottom surface with protruding features to facilitate airflow beneath food items placed in the basket, wherein the cooking basket is configured to be received in a cooking chamber of the air fryer, and mate with an air manifold of the air fryer positioned between a fan and heater assembly of the air fryer and the cooking basket to channel the airflow from the fan through the air accelerator vents and into the cooking basket.

In embodiments of this aspect, the disclosure according to any one of the above example embodiments, wherein the air accelerator vents are positioned as parallel apertures on a wall of the cooking basket and configured to direct the airflow in a substantially linear pattern through the cooking basket.

In embodiments of this aspect, the disclosure according to any one of the above example embodiments, wherein the protruding features comprise a plurality of bump features distributed across the bottom surface of the cooking basket.

In embodiments of this aspect, the disclosure according to any one of the above example embodiments, wherein the cooking basket is configured to direct the airflow into a top panel cavity and an air duct of the air fryer forming a return path for the airflow from the cooking basket back to the fan and heater assembly.

In embodiments of this aspect, the disclosure according to any one of the above example embodiments, wherein the air accelerator vents are venturi-shaped to increase the air velocity from the fan into the cooking basket.

In embodiments of this aspect, the disclosure according to any one of the above example embodiments, wherein the air accelerator vents create parallel air streams into the cooking basket.

In one aspect, the present disclosure relates to a method of controlling an air fryer, the method comprising receiving user input for cooking settings, activating a fan and heater assembly based on the user input, directing airflow from the fan through an air manifold and air accelerator vents into a cooking basket, wherein the air accelerator vents are configured to increase air velocity from the fan, circulating the airflow within the cooking basket, including beneath food items placed in the basket via protruding features on a bottom surface of the basket, monitoring temperature and cooking time, and adjusting operation of the fan and heater assembly based on the monitored temperature and the cooking time.

In embodiments of this aspect, the disclosure according to any one of the above example embodiments, wherein directing the airflow includes channeling the airflow through the air accelerator vents to create a substantially linear airflow pattern through the cooking basket.

In embodiments of this aspect, the disclosure according to any one of the above example embodiments, further comprising directing return airflow from the cooking basket through a top panel cavity and an air duct back to the fan and heater assembly.

In embodiments of this aspect, the disclosure according to any one of the above example embodiments, further comprising venting steam from the air fryer through a vent in the air duct.

In embodiments of this aspect, the disclosure according to any one of the above example embodiments, wherein directing the airflow includes passing the airflow through venturi-shaped openings of the air accelerator vents to increase the air velocity into the cooking basket.

In embodiments of this aspect, the disclosure according to any one of the above example embodiments, further comprising directing the airflow through apertures of a crisper tray within the cooking basket.

In embodiments of this aspect, the disclosure according to any one of the above example embodiments, further comprising creating parallel air streams into the cooking basket through the air accelerator vents, and maintaining a substantially constant cooking temperature by cyclically activating and deactivating the heater based on the monitored temperature.

### BRIEF DESCRIPTION OF THE DRAWINGS

So that the above-recited features of the present disclosure can be understood in detail, a more particular description of the disclosure, briefly summarized above, may be made by reference to example embodiments, some of which are illustrated in the appended drawings. It is to be noted, however, that the appended drawings illustrate only example embodiments of this disclosure and are therefore not to be considered limiting of its scope, for the disclosure may admit to other equally effective example embodiments.
FIG. 1A illustrates an isometric perspective view of a compact air fryer, according to aspects of the present disclosure.
FIG. 1B illustrates a side view of a compact air fryer, according to aspects of the present disclosure.
FIG. 1C illustrates a cutaway view of a compact air fryer rear perspective, according to aspects of the present disclosure.
FIG. 2A illustrates a cutaway view of a compact air fryer side view, according to aspects of the present disclosure.
FIG. 2B illustrates a cutaway perspective view of a compact air fryer, according to aspects of the present disclosure.
FIG. 3 illustrates a perspective view of a compact air fryer basket, according to aspects of the present disclosure.
FIG. 4 illustrates a perspective view of a crisper tray, according to aspects of the present disclosure.
FIG. 5A illustrates a cutaway view of a compact air fryer with an elevated crisper tray, according to aspects of the present disclosure.
FIG. 5B illustrates a cutaway view of a compact air fryer with a folded crisper tray, according to aspects of the present disclosure.
FIG. 6 illustrates a block diagram of a control system for a compact air fryer, according to aspects of the present disclosure.
FIG. 7 illustrates a flowchart of a control method for a compact air fryer, according to aspects of the present disclosure.

### DETAILED DESCRIPTION

The compact air fryer described herein may provide an innovative approach to air frying technology, combining efficiency, versatility, and compact design. The appliance may incorporate several features that offer improved cooking performance and user experience.

In some cases, the compact air fryer may include a cooking chamber designed to receive a cooking basket. The cooking basket may be equipped with air accelerator vents, which may be configured to increase air velocity within the cooking chamber. This feature may enhance the cooking process by promoting more efficient heat distribution and potentially reducing cooking times. This increased air speed may contribute to improved air frying results, potentially producing crispier exteriors and more evenly cooked food.

The improved airflow system may create parallel air streams that flow through the cooking chamber in a substantially linear pattern. The air accelerator vents may be venturi-shaped, creating a pressure differential that increases air velocity as it enters the cooking basket. This accelerated airflow may more effectively strip moisture from the food surface, resulting in enhanced browning and crisping while maintaining interior moisture. Additionally, the strategic positioning of these vents may create multiple parallel air streams that can simultaneously cook different food items placed at different levels within the cooking basket, potentially allowing for the preparation of complete meals in a single cooking cycle.

The compact air fryer may incorporate a fan and heater assembly, which may be responsible for generating and circulating hot air within the cooking chamber. In some implementations, the fan may include fan blades that may create a specific airflow pattern optimized for the compact design of the appliance.

A beneficial feature of the compact air fryer may be the positioning of the fan and heater assembly. In some cases, this assembly may be mounted at the back of the unit. This configuration may contribute to a reduced overall height of the appliance, potentially improving container loading and enhancing the user experience. The rear-mounted design may also help to eliminate the need for shaking the basket during cooking, as it may reduce direct radiant heating from above.

To further enhance the airflow dynamics within the appliance, the compact air fryer may include an air manifold. This air manifold may be positioned between the fan and heater assembly and the vents of the cooking basket. The air manifold may be designed to channel the airflow generated by the fan through the air accelerator vents and into the cooking basket. This feature may help to ensure even heat distribution and consistent cooking results.

The compact design and innovative features of this compact air fryer may offer several potential benefits. The reduced height and optimized component placement may result in a more space-efficient appliance, making it suitable for kitchens with limited counter space. The enhanced airflow system, including the air manifold and accelerator vents, may contribute to improved cooking performance, potentially resulting in crispier and more evenly cooked food. Additionally, the design may allow for greater versatility in cooking different types of food simultaneously, enhancing the overall utility of the appliance.

In some cases, the cooking chamber of the compact air fryer may be configured with a single large basket that may include an insertable divider. This feature may allow users to create two independent cooking chambers within the same appliance. The insertable divider may provide flexibility, enabling users to cook different food items separately or remove the divider to cook larger portions.

The cooking chamber may also be designed as a dual cooking chamber with separate cooking areas. In some cases, these separate cooking chambers may be arranged vertically, one on top of the other. Alternatively, the cooking chambers may be positioned side by side. This dual chamber configuration may allow for simultaneous cooking of different foods at different temperatures or for different durations.

The compact air fryer design may create parallel air flows, which may allow for cooking different foods at different levels within the appliance. This feature may enhance the versatility of the compact air fryer, potentially enabling users to prepare meals using a single appliance. For example, a user may cook a protein on one level while simultaneously preparing vegetables on another level.

These features may collectively contribute to a more efficient and versatile cooking experience, potentially reducing the need for multiple appliances and simplifying meal preparation. The compact air fryer may be particularly beneficial for users who value space-saving designs, multifunctionality, and the ability to prepare diverse meals with minimal equipment.

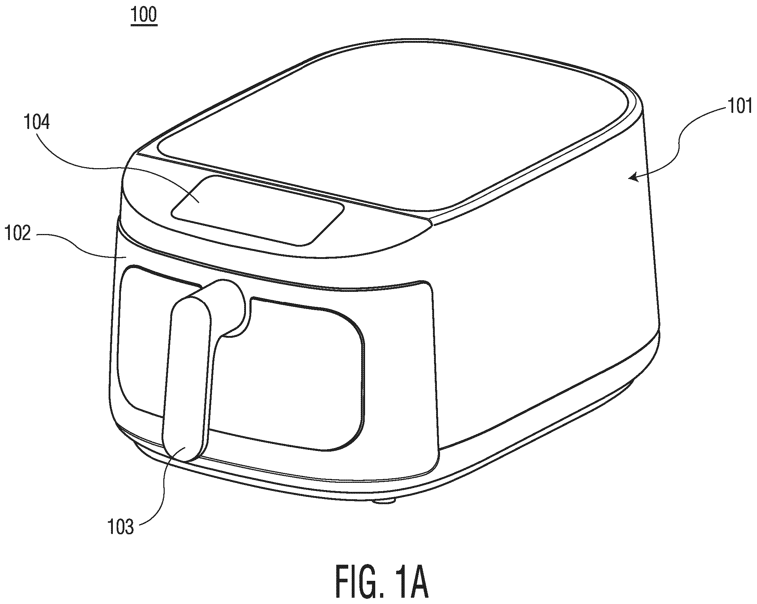

The compact air fryer may incorporate several external features designed to enhance functionality and user experience. FIG. 1A illustrates a compact air fryer perspective view 100, showcasing the external design elements of the appliance. The compact air fryer perspective view 100 may include an outer shell 101 that forms the main housing of the appliance. In some cases, the outer shell 101 may be constructed from durable materials such as heat-resistant plastics or stainless steel, providing both aesthetic appeal and protection for the internal components.

A basket door 102 may be positioned at the front of the compact air fryer, providing access to the cooking chamber. The removable basket door 102 may be designed to mount to the cooking basket (not shown) and seamlessly mate with the outer shell 101 when closed, maintaining the sleek appearance of the appliance. In some cases, the removable basket door 102 may include a handle 103 that extends outward, allowing users to easily slide the basket in and out of the cooking chamber. The handle 103 may be ergonomically designed for comfortable grip and ease of use.

A user interface 104 may be integrated into the top portion of the outer shell 101, providing controls for operating the compact air fryer. In some cases, the user interface 104 may include touch-sensitive buttons, a digital display, or a combination of both, allowing users to set cooking times, temperatures, and select pre-programmed cooking modes. In some implementations, the user interface 104 may be positioned on other areas of the outer shell 101, such as the front or side panels, to accommodate different user preferences or design considerations. This flexibility in positioning may allow for optimized ergonomics and accessibility based on the specific kitchen environment.

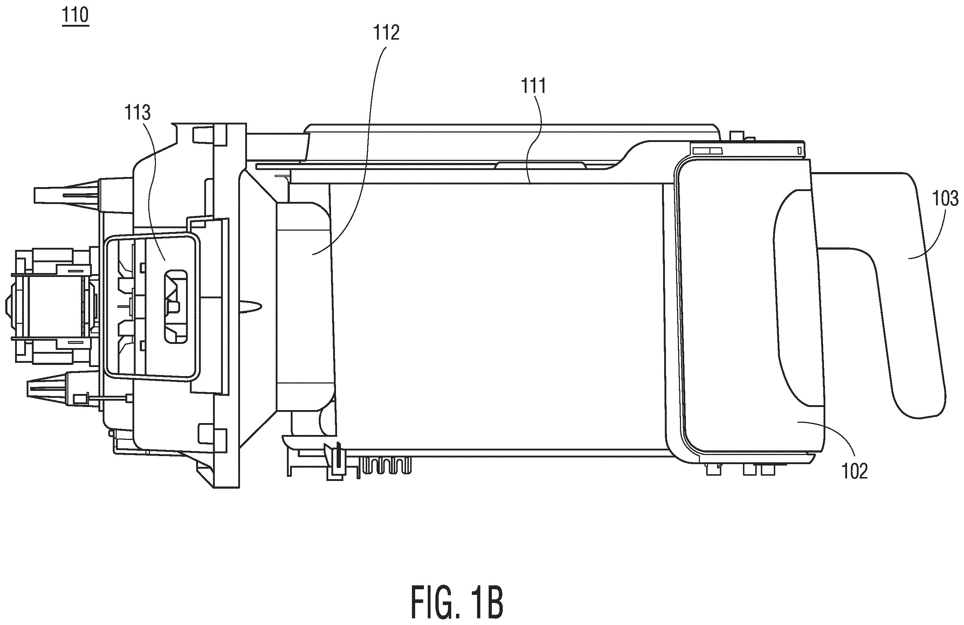

FIG. 1B illustrates a compact air fryer side view 110 with outer shell 101 removed, providing additional insight into the appliance's design and internal structure. The compact air fryer side view 110 reveals an internal body 111 that houses the main components of the compact air fryer and the cooking chamber. At the back of the unit, there may be a fan and heater housing 113 which contains the heating and air circulation components. An air manifold 112 may be positioned in front of the fan and heater housing 113, designed to direct airflow into the cooking chamber. The air manifold may be angled or contoured to efficiently channel and direct the airflow from the fan and heater assembly into the cooking chamber, potentially optimizing heat distribution and cooking performance.

The arrangement of these components may demonstrate the compact design of the compact air fryer, with the fan and heating elements positioned at the rear rather than the top of the unit. This configuration may contribute to the appliance's space-efficient design, potentially making it suitable for kitchens with limited counter space.

In some cases, the external design elements may work in conjunction with the internal components to enhance the overall functionality of the compact air fryer. For example, the basket door 102 may be designed to create a secure seal when the cooking basket is inserted in the cooking chamber, helping to maintain consistent cooking temperatures within the chamber. The user interface 104 may be positioned for easy access and visibility, potentially improving the user's ability to monitor and adjust cooking settings as desired.

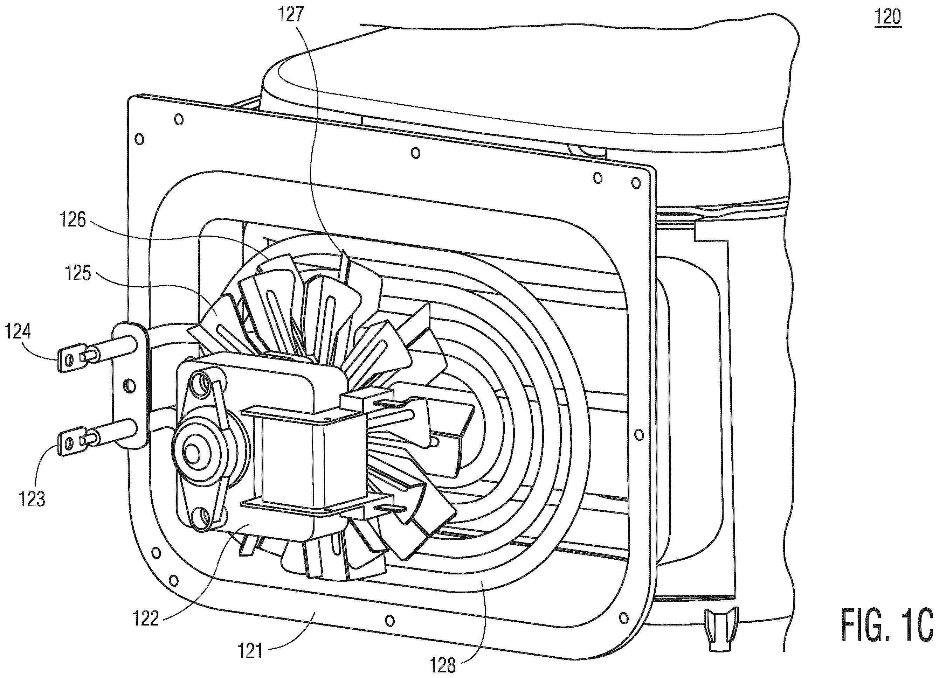

The compact air fryer incorporates an internal design that enhances airflow for cooking efficiency and performance. FIG. 1C illustrates a compact air fryer rear perspective view 120 with outer shell 101 removed, revealing components of the air circulation system. The compact air fryer rear perspective view 120 includes an air manifold flange 121, a motor assembly 122, electrical connectors 123 and 124, a first fan 125, a second fan 126, a linear airflow fan unit 127, and a heating element 128.

In some cases, the compact air fryer may utilize linear airflow fan unit 127 including a dual fan configuration. The first fan 125 may be employed for cooling purposes, while the second fan 126 may be used to generate the primary cooking airflow into the cooking chamber and into the cooking basket. For example, the first fan 125 may direct air between the external surface of the cooking chamber and the outer shell 101 of the compact air fryer, providing additional cooling to the unit's outer enclosure. However, in other implementations, the compact air fryer may aim to eliminate the secondary fan used for cooling the housing, potentially simplifying the design and reducing noise and power levels.

The linear airflow fan unit 127 may incorporate fan blades oriented at approximately at an angle (e.g. 45-degree angle) relative to the plane of the heating element. This orientation may create a linear airflow pattern, focusing the air movement on the back of the cooking basket.

The details of the internal workings of the compact air fryer are now described, with a particular emphasis on its airflow system. This provides insights into how the various components work in concert to create an efficient and effective cooking environment. Among others, the design elements that contribute to the beneficial airflow pattern, the function of the air manifold in directing and controlling air movement, and the role of the accelerator vents in enhancing air velocity are described.

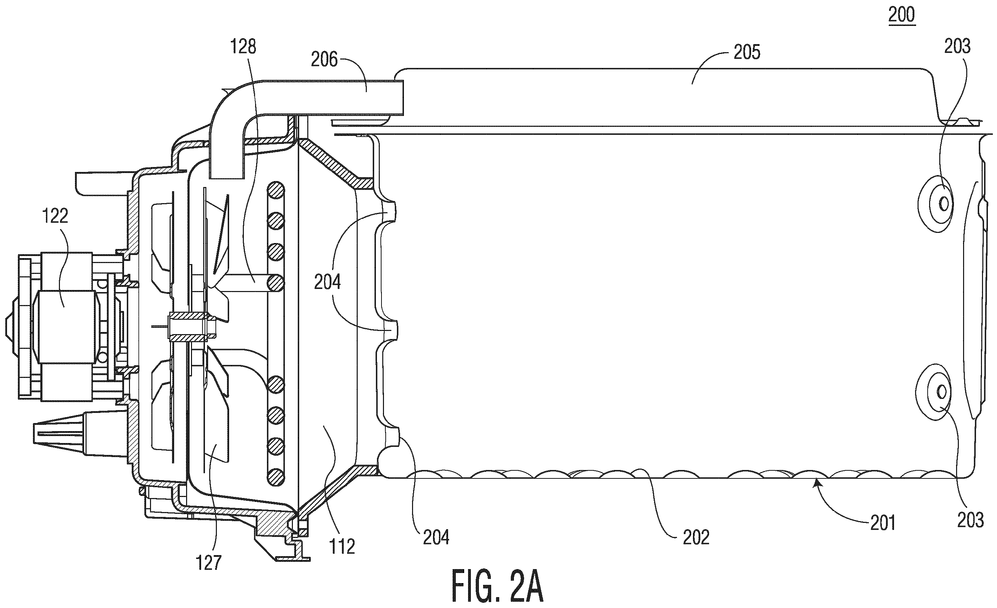

FIG. 2A presents a compact air fryer side cutaway view 200, further illustrating the internal components and their arrangement when the cooking basket 201 is inserted in the cooking chamber. The compact air fryer side cutaway view 200 includes an air duct 206, a top panel cavity 205, accelerator vents 204, protruding bump features 202, a basket 201, and basket door mounting holes 203. Basket 201 may accommodate a crisper tray with support legs (not shown).

The compact air fryer may incorporate a top panel cavity 205 and an air duct 206 that form a return path for airflow from the cooking basket back to the fan and heater assembly. The top panel cavity 205 is positioned above the cooking chamber and collects the air after it has circulated through the food, directing it toward the rear of the unit. The air duct 206 is a channeled pathway that connects the top panel cavity 205 to the fan and heater assembly, completing the circulation loop. This configuration may promote efficient air circulation within the appliance by creating a continuous flow path. The air duct 206 may include an air vent 221 configured to allow air and steam to escape from the compact air fryer, potentially enhancing the cooking process and preventing excess moisture buildup while maintaining beneficial cooking conditions.

A beneficial feature of the compact air fryer are the accelerator vents 204. These vents may be venturi-shaped openings positioned as parallel apertures along the walls of the cooking basket, designed to create a pressure differential that increases air velocity as it enters the cooking basket. The accelerator vents 204 direct airflow in a substantially linear pattern through the cooking chamber, creating multiple parallel air streams that can simultaneously cook different food items placed at different levels. This design differs from conventional cyclonic airflow patterns found in traditional air fryers. The bump features 202 are protrusions distributed across the bottom surface of the cooking basket 201 create small, elevated spaces that facilitate airflow beneath food items placed directly on the basket floor. These bump features 202 work in conjunction with the accelerator vents 204 to ensure comprehensive air circulation throughout the entire cooking chamber, even when the crisper tray is not in use, resulting in more evenly cooked food with improved texture and browning.

As mentioned above, accelerator vents 204 may incorporate a venturi-shaped design, which may contribute to increased airflow speed within the cooking chamber. In some implementations, these vents may feature a narrowing cross-section followed by a gradual expansion, similar to the structure of a venturi tube. As air passes through the constricted portion of the vent, the air accelerates due to the principle of continuity in fluid dynamics, specifically following the Bernoulli equation where the product of velocity and cross-sectional area remains constant. This acceleration may be maintained as the air enters the cooking chamber, potentially creating high-speed air jets with velocities greater than the inlet velocity. The subsequent expansion of the vent's cross-section may help to recover some of the pressure lost in the constriction while maintaining the increased air velocity, following a pressure recovery coefficient depending on the specific geometry. This venturi effect may enable the compact air fryer to generate faster-moving air streams compared to conventional designs, with large Reynolds numbers in the constriction zone, indicating fully turbulent flow that may enhance heat transfer to the food through increased convection coefficients and promote more efficient cooking and crisping through enhanced moisture removal rates.

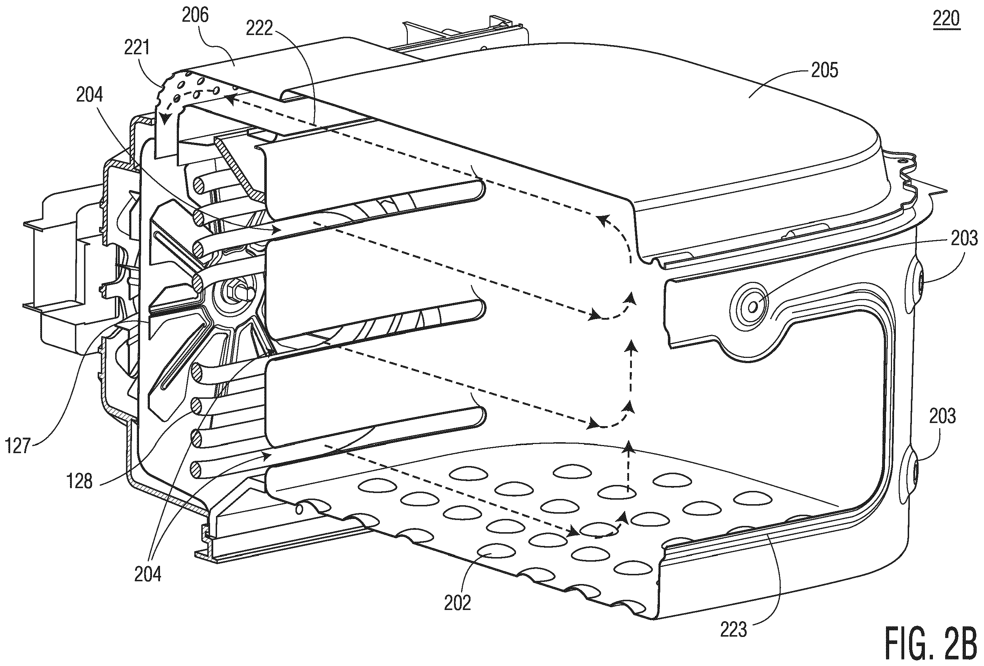

FIG. 2B showcases another view of the compact air fryer in a cutaway perspective view 220, highlighting the airflow path 222 and basket door aperture 223. The airflow path 222, indicated by dashed arrows, demonstrates how air may circulate through the cooking chamber. The air may flow from the linear airflow fan unit 127 through the accelerator vents 204, into the cooking basket 201, and then return through the top panel cavity 205 and air duct 206.

As described, basket 201 may include bump features 202 on its bottom surface. These bump features 202 may facilitate air circulation beneath food items placed directly in the basket, even without the use of the crisper tray. The bump features 202 create small, elevated spaces between the food and the basket floor, forming microchannels through which air can flow. As heated air enters the cooking chamber through the accelerator vents 204, a portion of this airflow is directed downward and horizontally across the bottom surface of the basket. The bump features 202, which may be arranged in a grid or staggered pattern, create localized pressure differentials that guide the airflow through these microchannels. This results in a continuous flow of heated air beneath the food items, which enhances heat transfer to the underside of the food through forced convection. The spacing between adjacent bump features 202 may be optimized to maintain sufficient air velocity while preventing excessive pressure drop. When the crisper tray is used, its support legs may elevate the cooking surface, potentially allowing for air circulation both above and below the food items.

This internal component arrangement and air flow system may offer several potential advantages. The linear airflow design may provide more consistent cooking results by directing heated air evenly across the food. The accelerator vents 204 may increase cooking efficiency by boosting air velocity. The dual-purpose design of the basket 201, with its bump features 202, may offer flexibility in cooking methods, allowing users to cook with or without the crisper tray.

Overall, the airflow 222 in the compact air fryer may be generated by the linear airflow fan unit 127, which creates a primary air stream directed by the manifold towards the cooking chamber. As this air stream encounters the accelerator vents 204, it may be channeled through these venturi-shaped openings, potentially increasing its velocity due to the pressure differential created by the vent design. The accelerated air may then enter the cooking basket as multiple parallel horizontal streams at different heights, corresponding to the positions of the accelerator vents 204 along the basket walls. This configuration may allow for simultaneous cooking of different food items placed at various levels within the basket.

As the air streams flow through the cooking basket, a portion of the air may circulate beneath the food items and/or crisper tray by passing between the bump features 202 on the basket's bottom surface. After circulating through the cooking chamber and interacting with the food, the air may rise and be guided into the top panel cavity 205. From there, the air may be directed into the return air duct 206, which channels it back to the fan unit. This continuous circulation may create a closed-loop system that efficiently reuses heated air while allowing for the release of excess moisture through the air vent 221, potentially maintaining beneficial cooking conditions throughout the cooking process.

In some implementations, the configuration of the accelerator vents may vary from the three horizontal venturi vents shown in the figures. The number, shape, and positioning of these vents may be adapted to suit different design requirements or cooking preferences. Regardless of the specific vent configuration, the designs are engineered to increase air speed within the basket, enhancing cooking efficiency and performance. For instance, the vents may be arranged as parallel vertical slits along the sides of the cooking basket, which may create a different airflow pattern while still accelerating air velocity within the cooking chamber. Alternatively, the vents may be angled to direct airflow in specific directions, potentially targeting areas of the cooking basket for more intense heat distribution while maintaining increased air speed. In other cases, the vents may take the form of a matrix of smaller, portal-type openings distributed across the cooking basket walls, which may create a more diffuse airflow pattern but still function to increase air velocity. These various configurations may allow for customization of the airflow characteristics, potentially optimizing the cooking performance for different types of food or cooking methods, while consistently delivering the core benefit of accelerated air speed within the basket.

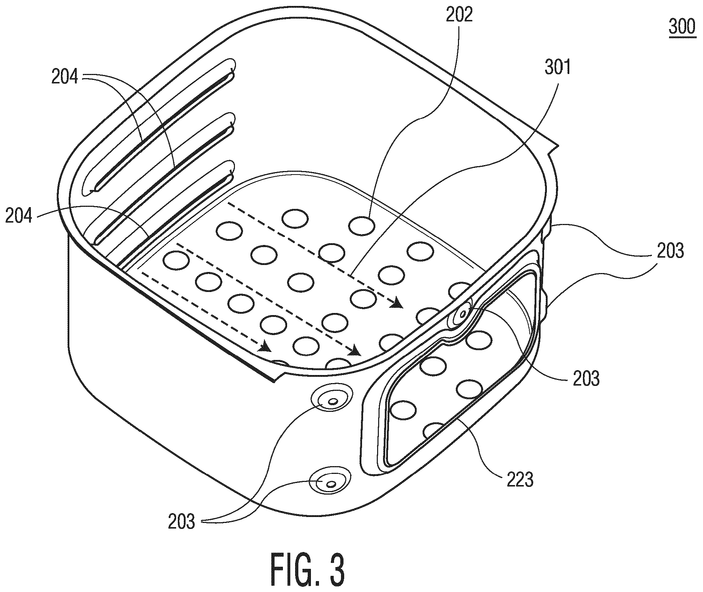

FIG. 3 illustrates an isolated perspective view 300 of the cooking basket 201 which is slid in and out of the cooking chamber. As described above, the cooking basket 201 may incorporate accelerator vents 204 positioned along its walls. These accelerator vents 204 may be configured as parallel apertures designed to direct airflow in a substantially linear pattern through the cooking basket 201. The cooking basket 201 may incorporate bump features 202 distributed across its bottom surface. These bump features 202 may be designed to facilitate airflow 301 beneath food items or a tray placed directly on the bottom surface of the cooking basket 201. The bump features 202 may create small spaces or channels through which air can circulate, potentially improving heat distribution and cooking consistency.

In other words, food items may be placed directly on the bump features 202 of the cooking basket 201, allowing air to circulate beneath the food through the spaces created by these bumps. Alternatively, a tray may be positioned on top of the bump features 202, which may still permit airflow underneath the tray due to the elevated surface created by the bumps. This versatile design may enable efficient air circulation and heat distribution whether cooking with or without an additional tray, potentially enhancing the overall cooking performance of the compact air fryer.

The removable basket door 102 with handle 103 may be designed to mount securely to the front of basket 201 using the basket door mounting holes 203. These mounting points may allow the door to be easily attached and detached from the basket, providing convenient access to the cooking chamber. When closed, the door may cover the basket door aperture 223, creating a seal that helps maintain the cooking environment within the compact air fryer. While this mounting design may offer a practical solution for accessing the cooking chamber, it is noted that other door mounting configurations may be possible.

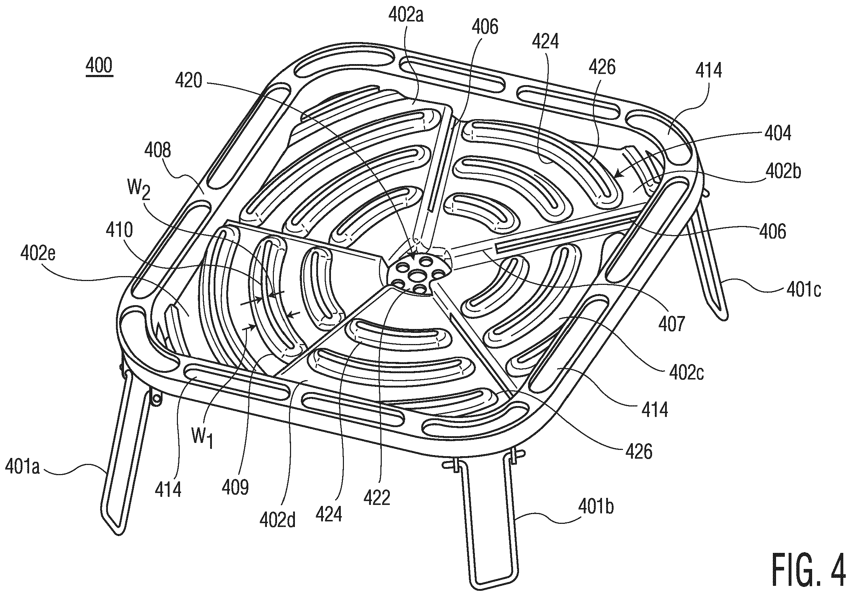

The cooking basket 201 may be designed to accommodate a crisper tray such as crisper tray 400 shown in FIG. 4. The crisper tray 400 may be positioned within the cooking basket 201 to provide an elevated cooking surface. In some cases, the crisper tray 400 may include apertures configured to allow airflow from the accelerator vents 204 to pass through, maintaining efficient air circulation throughout the cooking chamber.

FIG. 4 provides a detailed view of the crisper tray 400, which may incorporate several features to enhance cooking performance and versatility. The crisper tray 400 may include four support legs including a first support leg 401a, a second support leg 401b, and a third support leg 401c. These support legs may be hinged to allow the crisper tray 400 to stand in the basket in an elevated position or be folded to allow the tray to lay in the basket. This dual-position capability may also enable two trays to be inserted in the basket simultaneously, with one tray in the elevated position and the other in the laying position, potentially facilitating the cooking of different foods at different levels in the basket.

The crisper tray 400 may feature a series of inclined support surfaces 402a, 402b, 402c, 402d and 402e. These inclined support surfaces may be designed to promote even cooking and drainage. A support surface 404 may provide a stable base for food items. The crisper tray 400 may also include side apertures 406 defined in vertical step portions 407, which may further enhance air circulation.

In some implementations, the crisper tray 400 may be surrounded by a rim 408. The rim 408 may include rim apertures 414, which may contribute to air circulation especially when the tray is in the folded position. The crisper tray 400 may also feature ribs 409 with elongated apertures 410. These ribs 409 and apertures 410 may be designed to support food items while allowing air to circulate freely.

A central drain 420 with a drain surface 422 may be incorporated into the crisper tray 400 design. This central drain 420 may be positioned at a vertical level below the support surface 404, potentially facilitating the collection and removal of cooking liquids. A handle (not shown) may also be included in the area of the central drain to allow the user to easily insert and remove the tray from the basket.

Each rib 409 may include a base portion 424 extending upward from the support surface 404 and a top surface 426 raised relative to the base portion 424. In some cases, a first width W1 of the base portion 424 of each rib 409 may be wider than a second width W2 of each elongated aperture 410. This design may provide structural stability while maintaining efficient air circulation.

The combination of these features in the cooking basket 201 and crisper tray 400 may work together to enhance air circulation, promote even cooking, and provide versatility in food preparation within the compact air fryer. In some implementations, the crisper tray 400 may facilitate a multi-directional airflow pattern that enhances cooking performance. For example, the elongated apertures 410 on the ribs 409 may allow air to flow upward, directly contacting the bottom surface of food items placed on the tray, which may promote even cooking and browning. Simultaneously, the side apertures 406 in the vertical step portions 407 may direct air horizontally beneath the food items, potentially creating a circulation pattern that envelops the food from multiple angles. The rim apertures 414 may serve a dual purpose by allowing air above the tray to flow downward or air below the tray to flow upward, depending on the pressure differentials created by the compact air fryer's fan system. This interconnected network of apertures may create a dynamic airflow environment within the cooking basket, potentially optimizing heat distribution and moisture removal for improved cooking results.

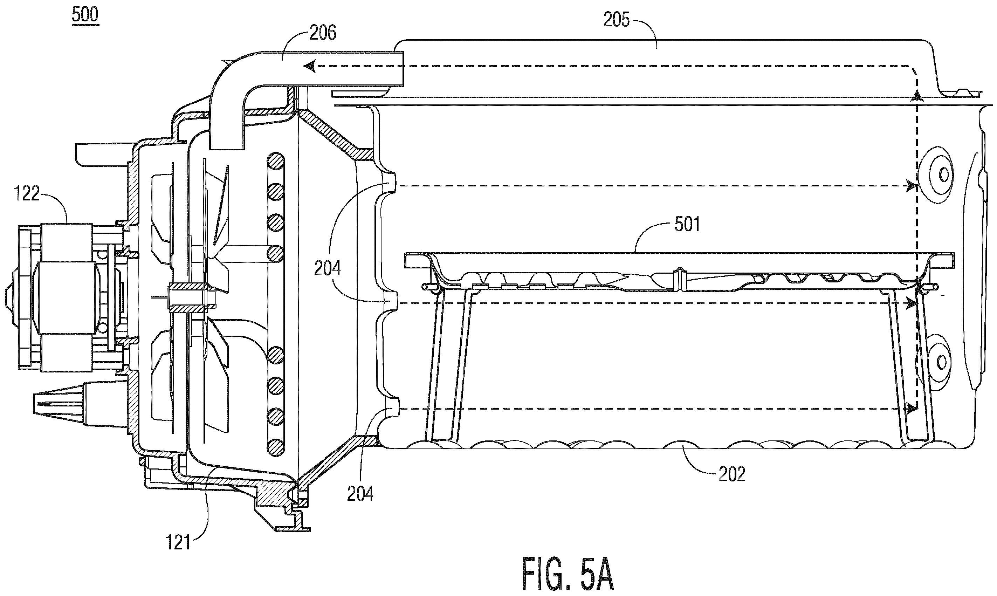

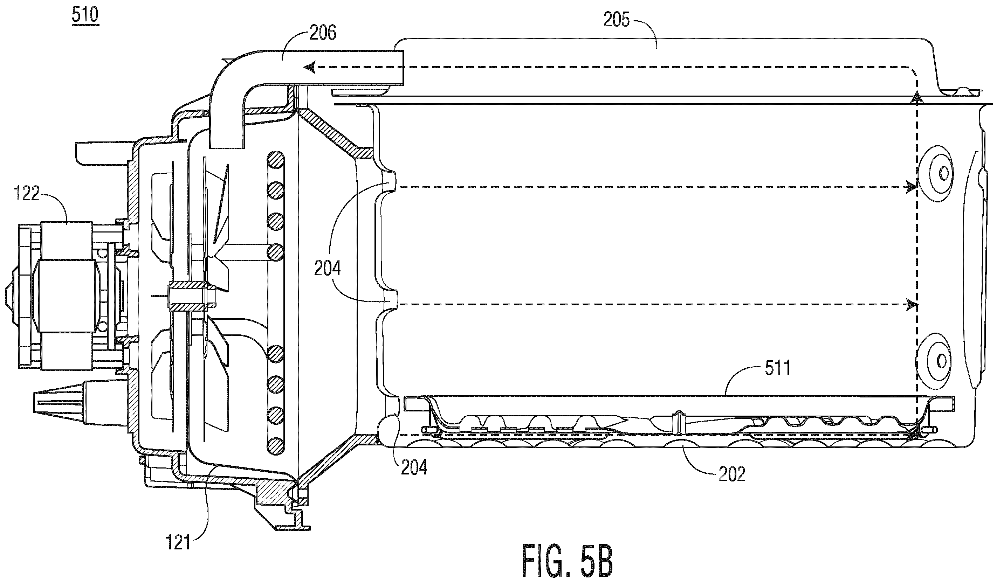

The crisper tray may be designed to be positioned in different configurations to optimize cooking performance and versatility. For example, FIG. 5A illustrates a compact air fryer side cutaway view 500 showing a crisper tray 501 in an elevated position within the cooking chamber. In another example, FIG. 5B illustrates a compact air fryer side cutaway view 510 showing a crisper tray 511 in a folded position within the cooking chamber.

In some cases, the crisper tray 501 in the elevated position may allow for cooking of multiple food items simultaneously. The elevated position of the crisper tray 501 may create separate cooking zones above and below the tray, enabling different foods to be cooked at the same time. The airflow, indicated by dashed arrows in FIG. 5A, may be directed through apertures in the crisper tray 501, allowing for efficient heat distribution and cooking of food items placed on the tray.

When the crisper tray 511 is in the folded position, as shown in FIG. 5B, the airflow pattern may be modified. The folded position of the crisper tray 511 may allow for a larger cooking space within the basket, which may be suitable for larger food items or when a single cooking zone is desired. The airflow may still be directed through the air accelerator vents 204, maintaining the benefits of the parallel air streams and increased air velocity. In this folded position, bump features 202 on the bottom surface of the basket allow air to flow below the tray, ensuring efficient air circulation throughout the cooking chamber.

In both configurations, the compact air fryer may utilize the air manifold flange 121 and motor assembly 122 to generate and direct the airflow through accelerator vents 204. The accelerated air then flows through the apertures in the crisper tray, including the elongated apertures 410, side apertures 406, and rim apertures 414, allowing for efficient cooking of food items placed on the tray. The air duct 206 and top panel cavity 205 collect the air after it passes through the cooking chamber and returning it to the fan and heater assembly for recirculation.

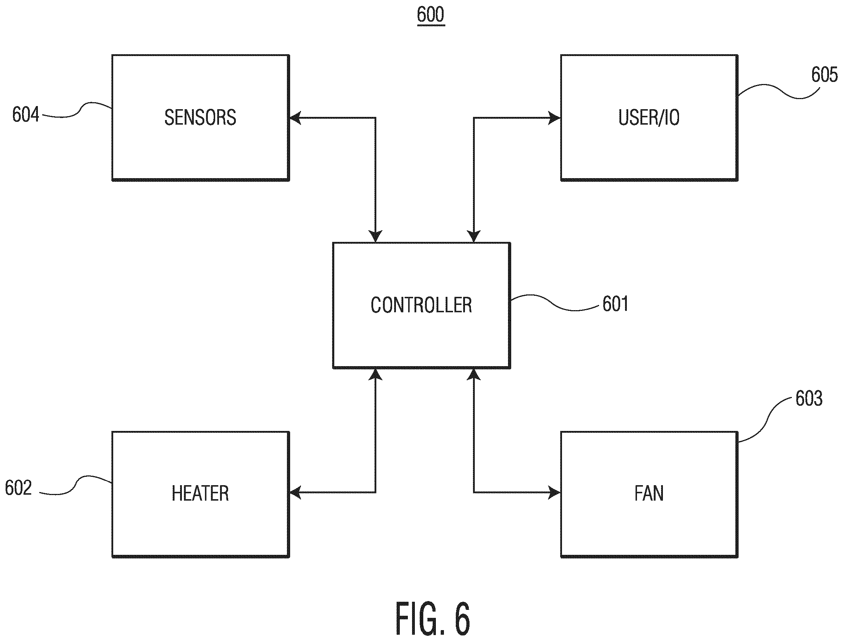

The compact air fryer may include a control system and operation method designed to optimize cooking performance and user experience. FIG. 6 illustrates a system diagram 600 of an example control system for the compact air fryer. The system diagram 600 may include a controller 601, a heater 602, a fan 603, sensors 604, and a user interface 605.

In some cases, the controller 601 may serve as the central processing unit of the compact air fryer, coordinating the operation of multiple components. The controller 601 may connect bidirectionally with the heater 602 and the fan 603, allowing for control and feedback of these components. The heater 602 may be implemented using various heating technologies, such as resistive heating elements, ceramic heating elements, quartz heating elements, or infrared heating elements, each offering different heat distribution characteristics and energy efficiency profiles. The fan 603 may be implemented as a centrifugal fan, axial fan, cross-flow fan, or a dual-fan system with different blade configurations optimized for specific airflow patterns, with options for variable speed control to adjust cooking intensity.

The sensors 604 may communicate with the controller 601, providing input data about operating conditions such as temperature and cooking time. These sensors 604 may include thermocouples, thermistors, infrared temperature sensors for non-contact temperature measurement, humidity sensors to monitor moisture levels within the cooking chamber, pressure sensors to detect air pressure changes, optical sensors to detect food browning levels, or weight sensors to determine food mass for automatic cooking adjustments. The user interface 605 may also connect bidirectionally with the controller 601, enabling user input and displaying system information. This user interface 605 may be implemented as physical buttons, capacitive touch controls, a touchscreen display, rotary dials, voice recognition systems, or remote-control capabilities through smartphone applications, and may include various output mechanisms such as light emitting diode (LED) indicators, liquid crystal displays (LCD), organic-LED (OLED) screens, audible alerts, or haptic feedback to communicate cooking status and completion notifications to the user.

The user interface 605 may provide various options for controlling the cooking process. In some implementations, users may be able to manually set the cooking temperature and time according to their preferences or recipe requirements. Additionally, the interface may offer pre-programmed cooking modes tailored for specific types of food, such as vegetables, meats, or baked goods. These preset programs may automatically adjust temperature, cooking time, and fan speed to optimize results for different dishes. The user interface may also allow for customization and saving of personal cooking programs, enabling users to store their preferred settings for frequently prepared meals. In some cases, the interface may provide real-time feedback on the cooking progress, allowing users to monitor and adjust settings as desired during the cooking process.

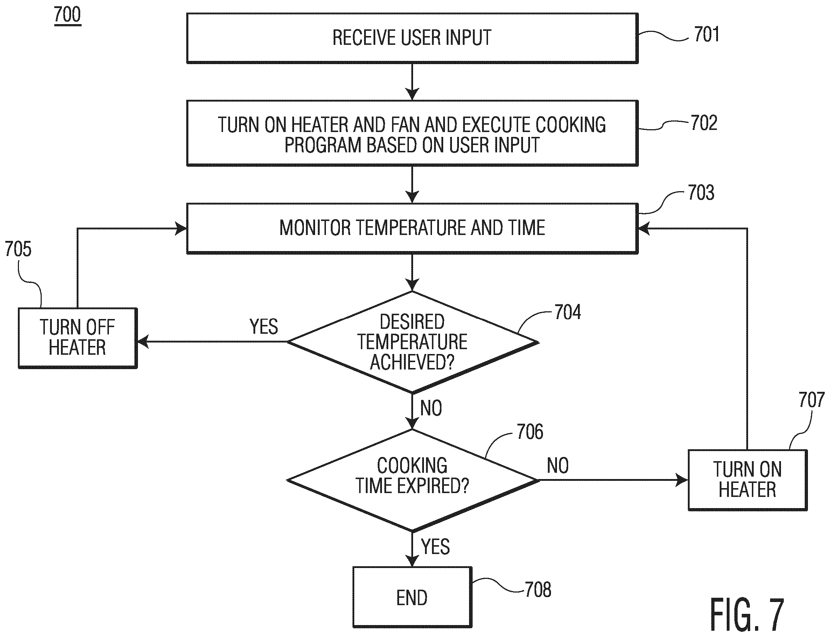

FIG. 7 illustrates a control method 700 for the compact air fryer including receiving user input (701), activating the heater and fan based on user input (702), monitoring temperature and time (703), determining if desired temperature is achieved (704), turning off the heater if temperature is achieved (705), checking if cooking time has expired (706), turning or maintaining the heater ON if cooking time has not expired (707), and ending the process when cooking time has expired (708).

The control method 700 may begin with step 701, where user input may be received through the user interface 605. Following the receipt of user input, the control method 700 may proceed to step 702, where the heater 602 and fan 603 may be activated based on the user input, and a cooking program may be executed.

The control method 700 may then move to step 703, where temperature and time may be monitored using the sensors 604. From step 703, the control method 700 may flow to a decision step 704 that may determine whether the desired temperature has been achieved. If the desired temperature may be achieved, the control method 700 may proceed to step 705, where the heater 602 may be turned OFF and monitoring continues.

If the desired temperature is not be achieved in step 704, the control method 700 may proceed to another decision step 706 that may check whether the cooking time has expired. If the cooking time may not have expired, the control method 700 may move to step 707, where the heater 602 may be turned or maintained ON, and then may return to step 703 to continue monitoring temperature and time. If the cooking time has expired, the control method 700 may proceed to step 708, where the process may end at which point the user is notified that the cook is complete.

The control method 700 may maintain a substantially constant cooking temperature by cyclically activating and deactivating the heater 602 based on the monitored temperature. This temperature control may be achieved through the feedback loop between steps 703 and 707, where the controller 601 may adjust the operation of the heater 602 based on temperature readings from the sensors 604.

The control system may also manage the return airflow from the cooking basket. In some cases, the return airflow may be directed through a top panel cavity and an air duct back to the fan 603 and heater 602 assembly. This circulation may contribute to efficient heat distribution and energy usage within the compact air fryer.

By integrating these various aspects, the control system and operation method of the compact air fryer may aim to provide efficient, consistent, and user-friendly cooking performance. The system may adapt to different cooking requirements based on user input and sensor feedback, potentially enhancing the versatility and effectiveness of the compact air fryer.

The compact air fryer design described herein may be modified in various ways. In some cases, the cooking chamber configuration may be altered to accommodate different cooking needs. For example, the cooking chamber may be divided into multiple compartments, allowing for simultaneous cooking of different foods at different temperatures. This multi-compartment design may include separate air flow systems for each compartment, enabling independent temperature control and cooking times.

In some cases, the air accelerator vents may be adjustable, allowing users to modify the airflow pattern and intensity within the cooking basket. This adjustability may be achieved through a mechanical system of movable louvers or electronically controlled apertures that can change the size and direction of the vents.

The fan and heater assembly may be modified to incorporate multiple fans or heating elements. In some cases, a dual fan system may be implemented, with one fan dedicated to circulating air within the cooking chamber and another for cooling the external housing. This configuration may enhance cooking performance while maintaining a safe external temperature.

Alternative materials may be used in the construction of various components. For example, the cooking basket may be fabricated from ceramic-coated metal or high-temperature resistant polymers instead of traditional metals. These materials may offer improved non-stick properties or enhanced heat distribution characteristics.

The user interface may be enhanced with smart technology features. In some cases, the compact air fryer may include wireless connectivity, allowing users to control and monitor the cooking process through a smartphone application. This feature may enable remote operation, recipe downloads, and personalized cooking recommendations based on user preferences and cooking history.

The air manifold design may be modified to incorporate a variable geometry system. This system may allow for dynamic adjustment of the airflow pattern during the cooking process, optimizing heat distribution for different types of food or cooking stages.

In some cases, the compact air fryer may include a self-cleaning feature. This may involve a high-temperature cleaning cycle or a steam cleaning system that helps remove food residue and grease from the cooking chamber and basket.

The crisper tray design may be adapted to include interchangeable inserts for different cooking purposes. For example, specialized inserts may be developed for grilling, baking, or steaming, expanding the versatility of the appliance.

In some cases, the compact air fryer may incorporate a pressure-cooking function. This may involve a modified lid design that can create a sealed environment for pressure cooking, with appropriate safety mechanisms and pressure release valves.

The heating element may be redesigned to use alternative heating technologies. For instance, infrared heating elements may be incorporated to complement the convection heating, potentially improving energy efficiency and cooking performance for certain types of food.

In some cases, the compact air fryer may include a built-in food recognition system using cameras or sensors. This system may automatically adjust cooking parameters based on the type and quantity of food detected in the cooking basket.

These variations and alternatives represent potential modifications to the described compact air fryer design. The core principles of efficient air circulation, compact design, and versatile cooking capabilities may be maintained while incorporating these additional features or design changes.

While the foregoing is directed to example embodiments described herein, other and further example embodiments may be devised without departing from the basic scope thereof. For example, aspects of the present disclosure may be implemented in hardware or software or a combination of hardware and software. One example embodiment described herein may be implemented as a program product for use with a computer system. The program(s) of the program product defines functions of the example embodiments (including the methods described herein) and may be contained on a variety of computer-readable storage media. Illustrative computer-readable storage media include, but are not limited to: (i) non-writable storage media (e.g., read-only memory (ROM) devices within a computer, such as CD-ROM disks readably by a CD-ROM drive, flash memory, ROM chips, or any type of solid-state non-volatile memory) on which information is permanently stored; and (ii) writable storage media (e.g., floppy disks within a diskette drive or hard-disk drive or any type of solid-state random-access memory) on which alterable information is stored. Such computer-readable storage media, when carrying computer-readable instructions that direct the functions of the presented example embodiments, are example embodiments of the present disclosure.

It will be appreciated by those skilled in the art that the preceding examples are exemplary and not limiting. It is intended that all permutations, enhancements, equivalents, and improvements thereto are apparent to those skilled in the art upon a reading of the specification and a study of the drawings are included within the true spirit and scope of the present disclosure. It is therefore intended that the following appended claims include all such modifications, permutations, and equivalents as fall within the true spirit and scope of these teachings.

## Claims

1. An air fryer, comprising:
a cooking basket including air accelerator vents configured to increase air velocity;
a cooking chamber for receiving the cooking basket;
a fan and heater assembly, the fan comprising fan blades for creating airflow;
an air manifold positioned between the fan and heater assembly and the cooking basket to channel the airflow from the fan through the air accelerator vents and into the cooking basket; and
protruding features on a bottom surface of the basket to facilitate the airflow beneath food items placed in the basket.

2. The air fryer of claim 1, wherein the air accelerator vents are positioned as parallel apertures on a wall of the cooking basket and configured to direct the airflow in a substantially linear pattern through the cooking basket.

3. The air fryer of claim 1, wherein the protruding features comprise a plurality of bump features distributed across the bottom surface of the cooking basket.

4. The air fryer of claim 1, further comprising a top panel cavity and an air duct configured to form a return path for the airflow from the cooking basket back to the fan and heater assembly.

5. The air fryer of claim 4, wherein the air duct includes a vent configured to allow steam to escape from the air fryer.

6. The air fryer of claim 1, wherein the air accelerator vents are venturi-shaped to increase the air velocity from the fan into the cooking basket.

7. The air fryer of claim 1, further comprising a crisper tray positioned within the cooking basket, the crisper tray including apertures configured to allow the airflow from the air accelerator vents to pass through the crisper tray.

8. A cooking basket for an air fryer, comprising:
air accelerator vents configured to increase air velocity; and
a bottom surface with protruding features to facilitate airflow beneath food items placed in the basket,
wherein the cooking basket is configured to be received in a cooking chamber of the air fryer, and mate with an air manifold of the air fryer positioned between a fan and heater assembly of the air fryer and the cooking basket to channel the airflow from the fan through the air accelerator vents and into the cooking basket.

9. The cooking basket of claim 8, wherein the air accelerator vents are positioned as parallel apertures on a wall of the cooking basket and configured to direct the airflow in a substantially linear pattern through the cooking basket.

10. The cooking basket of claim 8, wherein the protruding features comprise a plurality of bump features distributed across the bottom surface of the cooking basket.

11. The cooking basket of claim 8, wherein the cooking basket is configured to direct the airflow into a top panel cavity and an air duct of the air fryer forming a return path for the airflow from the cooking basket back to the fan and heater assembly.

12. The cooking basket of claim 8, the air accelerator vents are venturi-shaped to increase the air velocity from the fan into the cooking basket.

13. The cooking basket of claim 12, wherein the air accelerator vents create parallel air streams into the cooking basket.

14. A method of controlling an air fryer, the method comprising:
receiving user input for cooking settings;
activating a fan and heater assembly based on the user input;
directing airflow from the fan through an air manifold and air accelerator vents into a cooking basket, wherein the air accelerator vents are configured to increase air velocity from the fan;
circulating the airflow within the cooking basket, including beneath food items placed in the basket via protruding features on a bottom surface of the basket;
monitoring temperature and cooking time; and
adjusting operation of the fan and heater assembly based on the monitored temperature and the cooking time.

15. The method of claim 14, wherein directing the airflow includes channeling the airflow through the air accelerator vents to create a substantially linear airflow pattern through the cooking basket.

16. The method of claim 14, further comprising:
directing return airflow from the cooking basket through a top panel cavity and an air duct back to the fan and heater assembly.

17. The method of claim 16, further comprising:
venting steam from the air fryer through a vent in the air duct.

18. The method of claim 14, wherein directing the airflow includes passing the airflow through venturi-shaped openings of the air accelerator vents to increase the air velocity into the cooking basket.

19. The method of claim 14, further comprising:
directing the airflow through apertures of a crisper tray within the cooking basket.

20. The method of claim 14, further comprising:
creating parallel air streams into the cooking basket through the air accelerator vents; and
maintaining a substantially constant cooking temperature by cyclically activating and deactivating the heater based on the monitored temperature.
